# EUROPÄISCHE PATENTSCHRIFT

(11) **EP 0 784 567 B1**
(45) Veröffentlichungstag und Bekanntmachung des Hinweises auf die Patenterteilung: **04.11.1998**
(21) Anmeldenummer: 95931121.8
(22) Anmeldetag: 22.09.1995
(51) Int. Cl.: B65B 9/06, B65G 15/14

(54) **SCHLAUCHBEUTEL-VERPACKUNGSMASCHINE MIT ENDLOSEN STÜTZBÄNDERN**
BAG FORMING, FILLING AND SEALING MACHINE WITH ENDLESS SUPPORTING BELTS
MACHINE A FORMER ET REMPLIR DES SACHETS POURVUE DE BANDES SANS FIN DE SUPPORT

(30) Priorität: 03.10.1994 CH 2980/94
(43) Veröffentlichungstag der Anmeldung: 23.07.1997
(73) Patentinhaber: SIG Pack Systems AG, 8222 Beringen (CH)
(72) Erfinder: STRASSER, Thomas, CH-8463 Benken (CH); WALZ, Theo, CH-8213 Neunkirch (CH); KERN, Werner, CH-8200 Schaffhausen (CH)
(74) Vertreter: Münch, Otto
(86) Internationale Anmeldenummer: CH9500214
(87) Internationale Veröffentlichungsnummer: WO9610516

(56) Entgegenhaltungen:
- EP-A- 0 227 599
- GB-A- 1 274 832
- GB-A- 1 444 277

## Beschreibung

Verpackungsmaschinen für voneinander beabstandete Gruppen von hochkant stehenden Scheiben, z.B. Biskuits, sind z.B. aus den CH-Patenten Nr. 376 047 und Nr. 581 047 bekannt. Die Gruppen werden durch Scheiben auf einer Platte mit Abstand voneinander Vorgeschoben. Ein Einschlagmaterialband wird um die Gruppen zu einem Schlauch geformt und mit einer Längssiegelnaht versiegelt. Stromabwärts werden zwischen den Gruppen Quersiegelnähte gebildet und die einzelnen Packungen voneinander getrennt. Um zu vermeiden, dass einzelne Scheiben der Gruppen im Schlauch verschoben werden oder kippen, werden in die Zwischenräume zwischen den Gruppen mittels seitlich umlaufender Ketten metallene Halter eingeschoben, die erst unmittelbar vor der Quersiegelstation ausgefahren werden. Diese Vorrichtungen sind wenig flexibel, weil beim Wechsel des Formates der Biskuits und der Gruppenlänge jeweils die Ketten gegen andere mit passender Form und Abstand der Kalter ausgetauscht werden müssen.

Der vorliegenden Erfindung liegt die Aufgabe zugrunde, den obigen Nachteil zu vermeiden. Diese Aufgabe wird durch die Merkmalskombination der Ansprüche gelöst.

Aus der GB-A 2224 991 ist an sich ein Transportband zum Transportieren von Medikamenten-Tabletten bekannt. Auf der Aussenseite des Bandes stehen in vier Längsreihen und mehreren Querreihen federnde Finger geradlinig vom Band ab. Die Längsreihen verhindern das seitliche Abgleiten der Tabletten. Die Querreihen ermöglichen den Transport auch auf Steigungen. Die Finger haben keinen "Klemmbereich", weil die Tabletten lose zwischen die Reihen geschüttet werden.

Aus der US-A-5 154 281 ist eine Erntevorrichtung bekannt mit zwei umlaufenden Bändern, von welchen geradlinige, federnde Finger abstehen Die Stengel des Erntegutes werden zwischen den gegenüberliegenden Finger der beiden Bänder gehalten und in zwei Schritten abgeschnitten, wobei sie zwischen den beiden Schritten so durch ein umlaufendes Walzenpaar mit weiteren federnden Fingern nach unten gezogen werden, dass der Kopf der Pflanzen auf eine Vorgegebene Höhe abgesenkt wird. Der am Kopf verbleibende Stengelrest hat dann nach dem zweiten Schnitt eine einheitliche Länge.

Nachfolgend wird ein Ausführungsbeispiel der Erfindung anhand der Zeichnungen erläutert. Darin zeigt:
- Fig. 1: eine schematische Seitenansicht einer Verpackungsmaschine,
- Fig. 2: eine Draufsicht auf die Maschine,
- Fig. 3: eine Seitenansicht einer Stützeinheit,
- Fig. 4.: eine Draufsicht auf die Stützeinheit,
- Fig. 5: einen Längsschnitt durch ein Band mit Führung,
- Fig. 6 und 7: Schnitte nach der Linie VI-VI in Figur 5 für zwei Varianten des Bandes,
- Fig. 8: eine perspektivische Ansicht einer Packung,
- Fig. 9: ein Detail der Stützeinheiten,
- Fig. 10: einen Schnitt längs der Linie X-X in Figur 9, und
- Fig. 11 und 12: eine schematische Darstellung einer Einstelleinrichtung.

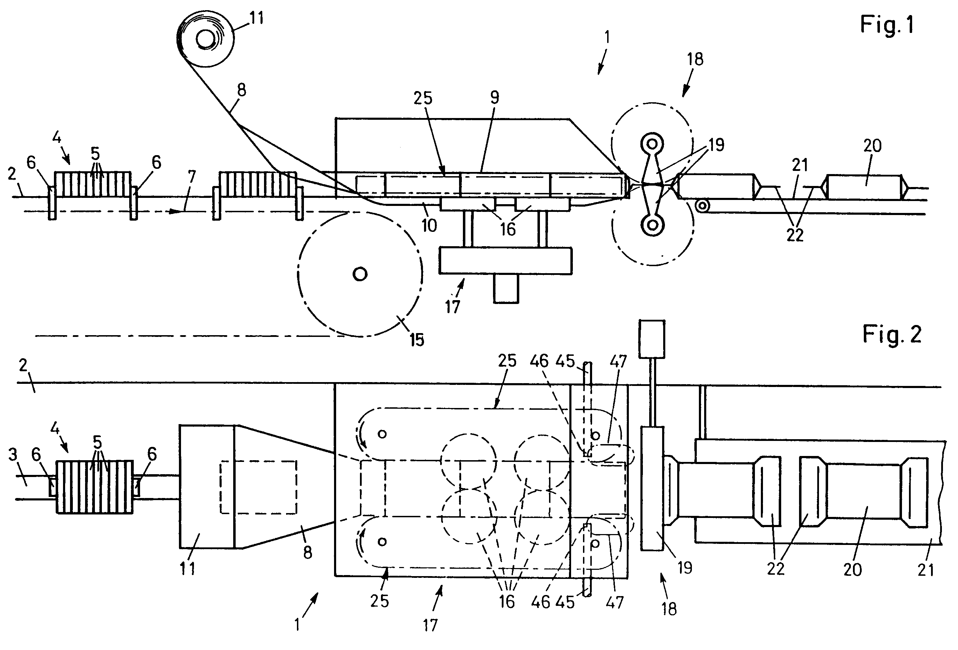

In Figuren 1 und 2 ist eine Horizontal-Schlauchbeutel-Verpackungsmaschine 1 schematisch dargestellt. Auf einem horizontalen Tisch 2 mit einem Längsschlitz 3 werden Gruppen 4 von aneinander anliegenden, hochkant stehenden Biskuits 5 angeliefert. Dazu durchgreifen den Schlitz 3 regelmässig beabstandete Paare von Mitnehmern 6, welche an einer umlaufenden Kette 7 befestigt sind. Benachbart dem stromabwärtigen Ende der Kette 7 wird um die Gruppe 4 mit einer Einschlagmaterialfolie 8 ein Schlauch 9 gebildet mit einer Längsflossennaht 10 auf einer Unterseite. Die Folie 8 wird von einer Vorratsrolle 11 abgezogen.

Stromabwärts des stromabwärtigen Umlenkrades 15 der Kette 7 wird die Naht 10 mit zwei Paaren von beheizten Siegelrollen 16 einer Längssiegelstation 17 versiegelt, welche gleichzeitig als Antrieb für den Vorschub des Schlauches 9 dienen. Nach der Station 17 folgt eine Quersiegelstation 18 mit einem Paar gegenläufig angetriebener, zylindersegmentförmiger Siegelbacken 19. Eine der Siegelbacken 19 enthält ein nicht dargestelltes Messer, welches die Einzelpackungen 20 vom Schlauch 9 mittig in der gebildeten Quersiegelnaht 22 abtrennt. Die Packungen 20 werden auf einem mit grösserer Umfangsgeschwindigkeit als die Backen 19 umlaufenden Förderband 21 abtransportiert.

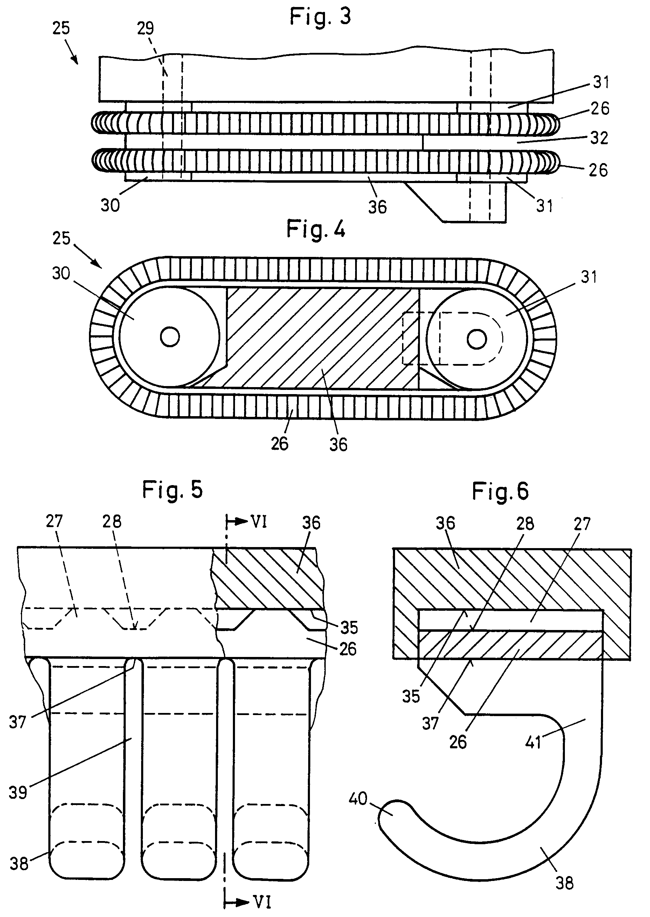

Um zu verhindern, dass sich insbesondere die ersten und letzten Biskuits 5 einer Gruppe 4 im Schlauch 9 verschieben können, oder dass sie umfallen, ist im Bereich vom Rad 15 bis kurz vor der Quersiegelstation 18 beidseits des Schlauches 9 je eine Stützeinrichtung 25 angeordnet, welche detaillierter in den Figuren 3 bis 12 dargestellt ist. Die Stützeinrichtung 25 umfasst auf beiden Seiten zwei übereinander angeordnete Bänder 26 mit Zähnen 27 auf der Innenseite 28. Die Bänder 26 sind am stromaufwärtigen Ende über zwei übereinander angeordnete, auf einer gemeinsamen Antriebswelle 29 sitzende Zahnräder 30 geführt. Am stromabwärtigen Ende sind die Bänder 26 über zwei koaxiale, voneinander beabstandete, einzeln gelagerte Umlenkrollen 31 geführt. Zwischen den Rollen 31 ist ein Schlitz 32 frei für den Eingriff eines später erläuterten Stütz- und Faltelementes.

Zumindest an den einander zugewandten Trums der einander gegenüberliegenden Bänder 26 sind diese in einer rechteckigen Nut 35 einer Schiene 36 in Höhen- und Querrichtung geführt. Die Schiene 36 erstreckt sich zwischen den Rädern 30 und den Rollen 31. Auf der Aussenseite 37 der Bänder 26 sind an diesen in gleicher Teilung wie die Zähne 27 und diesen gegenüberliegend federnde, bogenförmige Finger 38 befestigt. Die Finger 38 sind vorzugsweise am Band 26 angeschweisst oder mit diesem einstückig spritzgegossen. Deshalb bestehen die Finger 38 vorzugsweise aus demselben Material wie die Aussenseite 37 des Bandes 26, vorzugsweise aus Kunststoff, z.B. einem Elastomer, insbesondere aus Polyurethan. Dadurch, dass die Finger 38 den Zähnen 27 gegenüberliegen, können wesentlich kleinere Umlenkradien realisiert werden, was vor allem bei der stromabwärtigen Umlenkrolle 31 wichtig ist. In geraden Bandabschnitten sind die Finger 38 breiter als die Zwischenräume 39 zwischen den Fingern 38. Das freie Ende 40 der Finger 38 ist näher am Band 26 als der mittlere, den Klemmbereich bildende Teil des bogenförmigen Abschnittes. Die Kanten der Finger 38 sind gerundet. In Längsrichtung des Bandes sind die Finger 38 weniger elastisch als quer zum Band 26.

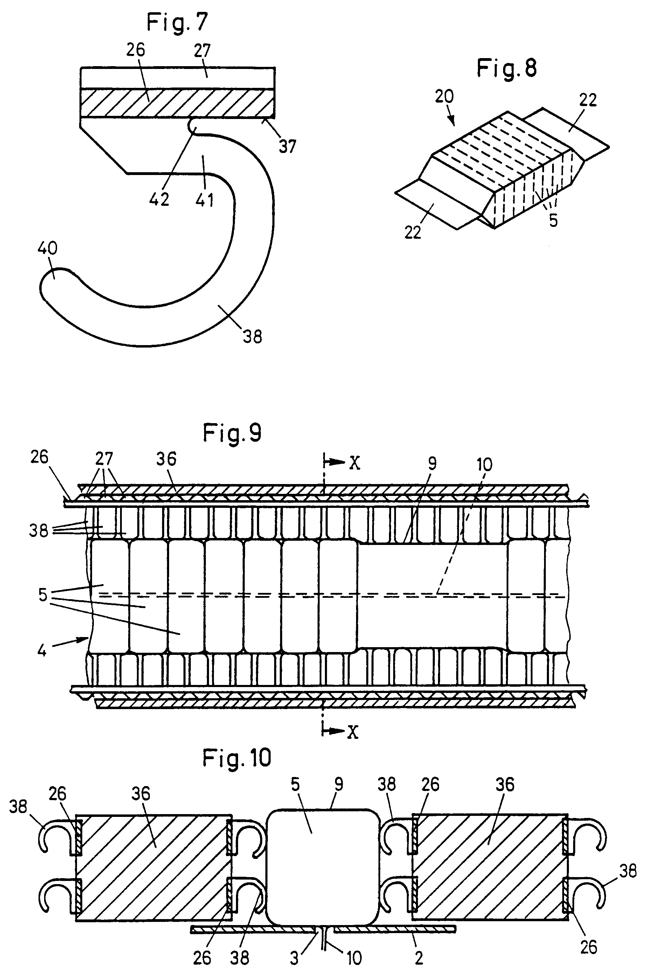

In Figur 7 ist eine Variante des Bandes 26 nach Figur 6 dargestellt, in welchem die Befestigungsstelle 41 der Finger 38 durch einen Einschnitt 42 näher zur Bandmitte gerückt ist. Bei dieser Variante sind die Finger 38 noch elastischer.

In Figur 9 ist ein Ausschnitt des Transportweges zwischen den Rädern 30 und den Rollen 31 in Horizontalschnitt dargestellt. Wie ersichtlich, ist die Breite der Finger 38 nicht abgestimmt auf die Breite der Biskuits 5. Deshalb können dieselben Bänder 26 für unterschiedliche Dicken und Formate der Biskuits 5 eingesetzt werden. In den Zwsichenräumen zwischen den Gruppen 4 von Biskuits 5 wird durch die Federkraft der Finger 38 der Schlauch 9 etwas eingedrückt, so dass die äussersten Biskuits 5 einer Gruppe 4 sicher gehalten werden. Sie können nicht umfallen oder sich verschieben. Die übrigen Finger 38 drücken den Schlauch 9 gegen die Biskuits 5 an, so dass die Gruppe 4 im Schlauch 9 als kompakte Einheit transportiert wird. Dabei ist die Umlaufgeschwindigkeit der Bänder 26 gleich der Umfangsgeschwindigkeit der Siegelrollen 26.

In Figur 2 sind zwei gegenüberliegende, stabförmige Falt- und Stützelemente 45 angedeutet, deren vorderes Ende 46 auf einer O-förmigen Bahn 47 umläuft. Die Umfangsgeschwindigkeit der Enden 46 im eingefahrenen Bereich entspricht jener der Siegelrollen 16. Die Stützelemente 45 durchgreifen die Schlitze 32 (Fig. 3). Die Enden 46 der Stützelemente 45 stützen also die vordersten Biskuits 5 einer Gruppe 4 ab, bevor deren Stützung durch die Finger 38 der Bänder 26 aufhört. Dadurch werden die Gruppen 4 von Biskuits 5 zuverlässig in kompakter Form innerhalb des Schlauches 9 zur Quersiegelstation 18 geführt. Die Stützelemente 45 werden dort erst zurückgezogen, wenn die Siegelbacken 19 bereits in den Zwischenraum zwischen den Gruppen 4 eingetaucht sind. Dadurch wird eine lückenlose Stützung der äussersten Biskuits 5 der Gruppen 4 bis zur Quersiegelstation 18 und gleichzeitig die Bildung einer Zwickel-Querfaltung ermöglicht, welche eine ansprechende Packung 20 (Fig. 8) ergibt.

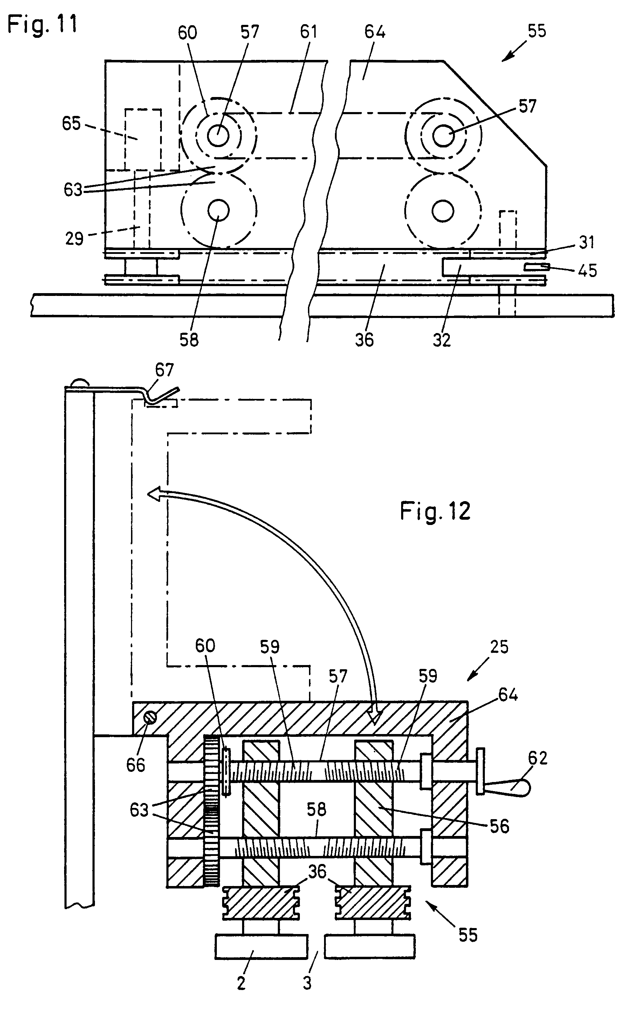

In Figuren 11 und 12 ist schematisch eine Einstelleinrichtung 55 zum Einstellen des gegenseitigen Abstandes der gegenüberliegenden Bandpaare dargestellt. Auf den Schienen 36 sind je zwei vertikale Ständer 56 befestigt, in welche je zwei Gewindespindeln 57, 58 eingeschraubt sind. Die Spindeln 57, 58 haben je zwei gegenläufige Gewinde 59. Die oberen beiden Spindeln 57 sind durch Kettenräder 60 und eine Kette 61 miteinander verbunden. Eine von ihnen trägt eine Kurbel 62. Die beiden übereinanderliegenden Spindeln 57, 58 jedes Ständers 56 sind ausserdem mittels Zahnrädern 63 miteinander verbunden. Die Spindeln 57, 58 sind in einem Halter 64 drehbar gelagert. Beim Drehen der Kurbel 62 drehen alle vier Spindeln 57, 58 synchron, so dass die Schienen 36 parallel auseinander oder gegeneinander verschoben werden. In Figur 11 ist noch ein Motor 65 zum Antrieb der Wellen 29 angedeutet. Um die Wartung zu erleichtern, kann der Halter 64 um eine horizontale Achse 66 um 90° hochgeschwenkt werden. In der hochgeschwenkten Lage wird er durch eine Raste 67 gehalten. Der Kalter 64 kann zusätzlich noch in der Höhe einstellbar ausgebildet werden.

Durch die beschriebene Vorrichtung wird eine grosse Betriebssicherheit auch bei grossen Produkte-Toleranzen erreicht. Die Umstellung auf andere Formate der Biskuits 5 oder andere Längen der Gruppen 4 ist problemlos möglich, ohne dass die Bänder 26 ausgetauscht werden müssen. Der Schlauch 9 wird schonend gegen die Produkte geklemmt. Es sind keine Perforationen zu befürchten. Die Bänder 26 sind sehr einfach zu reinigen und sind hygienisch einwandfrei. Weil die Finger 38 nicht mit ihren Enden 40, sondern mit einem bogenförmigen Bereich gegen den Schlauch 9 anliegen, ergibt sich beim Einfedern eine gewisse Abrollbewegung in der Fingerebene, also quer Bandlängsrichtung, so dass die resultierende Kraft kaum Komponenten in Längsrichtung des Schlauches und in Höhenrichtung hat. Dadurch wird eine hohe Leistung und eine grosse Lagetreue der Produkte auch im diskontinuierlichen Betrieb erreicht, so dass Ausschuss weitgehend vermieden wird.

## Patentansprüche

1. Endloses Band, das an seiner Innenseite (28) zum Antrieb durch ein Transportrad (30) ausgebildet ist und an dessen Aussenseite (37) in annähernd gleichmässigen Abständen federnde Finger (38) befestigt sind, deren Klemmbereich zwischen ihrer Befestigungsstelle (41) am Band (26) und ihrem freien Ende (40) angeordnet ist, wobei die Finger (38) zwischen der Befestigungsstelle (41) und dem Fingerende (40) bogenförmig ausgebildet sind.

2. Band nach Anspruch 1, wobei sich die Ebene der Finger (38) quer zur Bandebene erstreckt.

3. Band nach Anspruch 1 oder 2, wobei in einem geraden Bandabschnitt der Zwischenraum (39) zwischen den Fingern (38) kleiner ist als die Fingerbreite.

4. Band nach einem der Ansprüche 1 bis 3, wobei die Innenseite (28) des Bandes (26) in regelmässigen Abständen Zähne (27) aufweist, und wobei vorzugsweise jedem Finger (38) einer der Zähne (27) gegenüberliegt.

5. Band nach einem der Ansprüche 1 bis 4, wobei die Fingerenden (41) näher beim Band angeordnet sind als der äussere Teil der Fingerbogen.

6. Band nach einem der Ansprüche 1 bis 5, wobei es mindestens auf der Aussenseite (37) gleiches Material wie die Finger (38) enthält.

7. Band nach einem der Ansprüche 1 bis 6, wobei die Finger (38) aus Kunststoff, vorzugsweise aus einem Elastomer, insbesondere aus Polyurethan bestehen.

8. Verpackungsmaschine mit mindestens zwei Bändern (26) gemäss einem der Ansprüche 1 bis 7, wobei die Verpackungsmaschine (1) eine Einrichtung zum Formen eines Schlauches (9) aus einem Einschlagmaterial (8) um kontinuierlich in regelmassigen Abständen zugeführte Produkte (4), insbesondere Gruppen hochkant stehender Scheiben (5), herum umfasst, sowie eine Längssiegeleinrichtung (17) zur Bildung einer Längssiegelnaht (10) und eine Quersiegeleinrichtung (18) zur Bildung von Quersiegelnähten (22) zwischen jeweils zwei Produkten (4), wobei die beiden Bänder (26) auf gegenüberliegenden Seiten des Schlauches (9) angeordnet und durch je ein Transportrad (30) synchron mit dem Vorschub des Verpackungsschlauches (9) angetrieben sind, und wobei eine Anzahl der federnden Finger (38) den Verpackungsschlauch (9) in die Produktlücken eindrückt und eine weitere Anzahl der federnden Finger (38) den Verpackungsschlauch (9) gegen die Produkte (4) andrückt.

9. Maschine nach Anspruch 8, wobei jedes Band (26) am stromaufwärtigen Ende um ein Antriebsrad (30) und am stromabwärtigen Ende benachbart der Quersiegeleinrichtung (18) um ein Umlenkorgan (31) geführt ist.

10. Maschine nach Anspruch 9, wobei jedes Band (26) zwischen dem Antriebsrad (30) und dem Umlenkorgan (31) auf seiner Innenseite in Höhenrichtung und in Querrichtung durch eine Schiene (36) geführt ist.

11. Maschine nach Anspruch 8 oder 9, wobei auf jeder Seite zwei Bänder (26) mit Abstand übereinander angeordnet sind.

12. Maschine nach Anspruch 11, wobei das Umlenkorgan zwischen den beiden übereinander angeordneten Bändern (26) unterbrochen ist für den Eingriff von horizontal bewegten Stütz- und/oder Faltelementen (45).

13. Maschine nach einem der Ansprüche 8 bis 12, wobei der seitliche Abstand der gegenüberliegenden Bänder (26) einstellbar ist.

## Claims

1. Endless band, designed to be driven on its inside (28) by a transport wheel (30), having attached to its outside (37) nearly evenly spaced elastic fingers (38), the clamping range of which is arranged between their fastening point (41) on belt (26) and their free end (40), wherein the fingers (38) have a curved shape between the fastening point (41) and the finger end (40).

2. Belt according to Claim 1, wherein the plane for fingers (38) extends transverse to the belt plane.

3. Belt according to Claim 1 or 2, wherein the intermediate space (39) between the fingers (38) on a straight belt segment is smaller than the finger width.

4. Belt according to one of the Claims 1 to 3, wherein the inside (28) of belt (26) has regularly spaced teeth (27), and wherein preferably one of the teeth (27) is located opposite each finger (38).

5. Belt according to one of the Claims 1 to 4, wherein the finger ends (41) are arranged closer to the belt than the outer portion of the finger curve.

6. Belt according to one of the Claims 1 to 5, wherein it comprises the same material as the fingers (38), at least on the belt outside (37).

7. Belt according to one of the Claims 1 to 6, wherein the fingers (38) are composed of synthetic material, preferably an elastomer, and in particular polyurethane.

8. Packaging machine with at least two belts (26) in accordance with one of the Claims 1 to 7, wherein the packaging machine (1) comprises as device for forming a tube (9) from a packaging material (8) around products (4), especially groups of vertically standing discs (5), which are supplied continuously at regular intervals, as well as a longitudinal sealing device (17) for forming a longitudinal sealing seam (10) and transverse sealing device (18) for forming transverse sealing seams (22) between two products (4) each, wherein the two belts (26) are arranged on opposite sides of the tube (9), are driven synchronously with the forward feed for the packaging tube (9) by one each transport wheel (30), and wherein a number of the elastic fingers (38) press the packaging tube (9) into the products gaps and an additional number of elastic fingers (38) push the packaging tube (9) against the products (4).

9. Machine according to Claim 8, wherein each belt (26) is guided at the upstream end around a drive wheel (30) and at the downstream end, next to the transverse sealing device (18) around a deflection element (31).

10. Machine according to Claim 9, wherein each belt (26) is guided between the drive wheel (30) and the deflection element (31) on its inside in the upward direction and by a rail (36) in transverse direction.

11. Machine according to Claim 8 or 9, wherein two belts (26) are arranged on each side, one above the other at a distance.

12. Machine according to Claim 11, wherein the deflection element between the two belts (26) that are arranged one above the other is interrupted for the engagement of horizontally moved supporting and/or folding elements (45).

13. Machine according to one of the Claims 8 to 12, wherein the side distance of the facing belts (26) can be adjusted.

## Revendications

1. Bande sans fin, dont la face interne (28) est réalisée pour pouvoir être entraînée par une roue transporteuse (30) tandis que sur sa face externe (37) sont fixés, avec des espacements sensiblement égaux, des doigts élastiques (38) dont la zone de serrage se situe entre leur point de fixation (41) sur la bande (26) et leur extrémité libre (40), les doigts (38) étant recourbés en arc entre le point de fixation (41) et l'extrémité (40) du doigt.

2. Bande selon la revendication 1,
caractérisée en ce que
le plan de chaque doigt (38) est perpendiculaire au plan de la bande.

3. Bande selon la revendication 1 ou 2,
caractérisée en ce que
dans une partie rectiligne de la bande, l'espace intermédiaire (39) séparant deux doigts successifs (38) est inférieur à la largeur du doigt.

4. Bande selon une des revendications 1 à 3,
caractérisée en ce que
la face interne (28) de la bande (26) porte, à des intervalles réguliers, des dents (27), chacun des doigts (38) étant de Préférence disposé en face d'une dent (27).

5. Bande selon une des revendications précédentes 1 à 4,
caractérisée en ce que
l'extrémité (41) de chaque doigt est plus proche de la bande que la partie externe de l'axe du doigt.

6. Bande selon une des revendications précédentes 1 à 5,
caractérisée en ce qu'
au moins la surface externe (37) de la bande est faite du même matériau que les doigts (38).

7. Bande selon une des revendication précédentes 1 à 6,
caractérisée en ce que
les doigts (38) sont en matière plastique, de préférence un élastomère, en particulier de polyuréthane.

8. Machine d'emballage équipée d'au moins deux bandes (26) selon une des revendications 1 à 7,
dans laquelle :
· un dispositif enveloppe du produit (4) amené en continu et avec des espacements réguliers, en particulier des groupes de disques (5) dressés verticalement, de manière à former un tuyau (9) à partir d'un matériau pliable (8)
· il est prévu un dispositif (17) pour former un cordon de soudure en long (10) et également un dispositif (22) pour former un cordon de soudure transversal (22) entre chacun des produits successifs (4);
· les deux bandes (26) sont placées sur des côtés opposés du tuyau (9) et sont entraînées chacune par une roue de transport (30) en synchronisme avec le mouvement d'avancement du tuyau d'emballage (9),
un certain nombre des doigts élastiques (38) pousse le tuyau d'emballage (9) dans les espaces séparant les produits pendant que d'autres doigts élastiques (38) appliquent le tuyau d'emballage (9) sur les produits (4).

9. Machine selon la revendication 8,
caracterisée en ce que
chaque bande (26) est guidée, à son extrémité amont, par une roue d'entraînement (30) tandis qu'à son extrémité aval proche du dispositif de soudure transversale (18), elle est guidée par un organe de renvoi (31).

10. Machine selon la revendication 9,
caractérisée en ce que
chaque bande (26), entre la roue d'entraînement (30) et l'organe de renvoi (31) est guidée sur sa face interne, en direction verticale et en direction transversale, par un rail (36).

11. Machine selon l'une des revendications 8 ou 9,
caractérisée en ce que
de chaque côté sont montées deux bandes (26) espacées entre elles.

12. Machine selon la revendication 11,
caractérisée en ce que
l'organe de renvoi est interrompu entre les deux bandes (26) superposées, pour permettre l'intervention d'éléments de soutien et/ou de pliage (45) se déplaçant horizontalement.

13. Machine selon l'une des revendications précédentes 8 à 12,
caractérisée en ce que l'espacement latéral des bandes opposées (26) est réglable.
